# FASCICULE DE BREVET EUROPEEN

(11) **EP 3 947 957 B1**
(45) Date de publication et mention de la délivrance du brevet: **24.04.2024**
(21) Numéro de dépôt: 20713896.7
(22) Date de dépôt: 26.03.2020
(51) Int. Cl.: F03B 13/20, F03B 13/18, B63B 35/44

(54) **DISPOSITIF DE PROPULSION ET DE CONVERSION D'ÉNERGIE DES VAGUES**
WELLENENERGIEWANDLER UND ANTRIEBSVORRICHTUNG
WAVE ENERGY CONVERSION AND PROPULSION DEVICE

(30) Priorité: 27.03.2019 FR 1903188
(43) Date de publication de la demande: 09.02.2022
(73) Titulaire: Institut Francais de Recherche pour l'Exploitation de la Mer (IFREMER), 92130 Issy-les-Moulineaux (FR)
(72) Inventeur: GIUSTI, Olivier, 29280 Plouzané (FR); DUMERGUE, Nicolas, 29280 Plouzané (FR); LE BOULLUEC, Marc, 29280 Plouzané (FR); LE ROUX, Dominique, 29280 Plouzané (FR)
(74) Mandataire: Plasseraud IP
(86) Numéro de dépôt international: PCT/EP2020/058612
(87) Numéro de publication internationale: WO 2020/193725

(56) Documents cités:
- CN-A- 107 187 572
- FR-A1- 2 669 886
- GB-A- 541 775
- GB-A- 2 045 708
- US-A- 1 066 896
- US-A- 4 332 571
- US-A- 5 673 645

## Description

### Domaine et contexte de l'invention

La présente invention se rapporte au domaine de l'énergie, et plus particulièrement de la conversion de l'énergie des vagues en tout autre type d'énergie exploitable.

Dans ce but, elle vise un dispositif ou « système houlomoteur » permettant de convertir l'énergie des mouvements de vague générés par la houle en énergie exploitable, et tout en produisant une propulsion contraire au sens de la houle.

En effet, la houle se formant à la surface de l'eau dans les mers et les océans est un phénomène ondulatoire généré principalement par le vent, et capable de fournir une énergie dite renouvelable. L'énergie générée par conversion de cette énergie renouvelable peut-être une énergie mécanique, hydraulique, ou encore une énergie électrique. Dans le cas de la production d'énergie électrique, celle-ci est destinée à alimenter des équipements électriques sur le dispositif ou à être transportée vers un réseau de distribution électrique.

La captation et la conversion de cette énergie renouvelable peut être réalisée de différentes manières, mais la majorité des systèmes houlomoteurs actuels reposent sur un même principe. Il consiste au déplacement d'un élément mobile au gré du mouvement des vagues par rapport à un élément fixe. Ce déplacement d'un premier élément par rapport à un second est ensuite converti en énergie exploitable par un système de conversion d'énergie.

Il existe de nombreux systèmes houlomoteurs dans le monde et qui peuvent être classés en trois grandes catégories :
- Les systèmes pilonnants ou dits « point absorber » constitués soit d'une structure flottante, partiellement ou totalement immergée, reliée à une embase gravitaire posée sur le fond. Soit de deux structures flottantes reliées par un degré de liberté de translation verticale, l'une des structures flottantes suivant la houle et l'autre possédant une grande inertie et bougeant peu.
- Les volets battants, posés sur des embases gravitaires en eau peu profonde, proche des côtes. Ils sont activés en rotation par le mouvement horizontal des particules d'eau.
- Les colonnes d'eau oscillantes pouvant être flottantes ou rattachées au littoral, et pour lesquelles la pression des vagues permet de faire tourner une turbine à air comprimé située dans un tunnel.

Dans le cas de la conversion en énergie électrique, le système de conversion est basé sur l'utilisation d'un générateur électrique actionné par la mise en rotation d'un autre élément sous l'action des vagues. Cet élément peut être un moteur hydraulique ou directement une génératrice électrique elle-même.

Les principaux freins actuels au développement commercial des systèmes houlomoteurs sont un manque de maturité, ainsi que des coûts de fabrication et d'entretien élevés. En effet, les conditions environnementales difficiles auxquelles ils sont soumis couplées à une efficacité modérée rendent le coût de production d'énergie peu concurrentiel par rapport aux autres énergies renouvelables comme le solaire ou l'éolien, dont les technologies sont maintenant à maturité avec un coût de fabrication qui ne cesse de baisser.

En effet, les postes de dépenses élevées d'un système houlomoteur installé en mer se situent dans les matériaux constituant le système houlomoteur qui doivent être capables de résister à ces conditions environnementales, ainsi que dans son installation en milieu marin, par exemple au niveau de l'ancrage.

Par conséquent, il subsiste un besoin de proposer une solution à faible coût capable de convertir de manière efficace l'énergie renouvelable générée par le mouvement des vagues.

Des exemples et des modes de réalisations de l'art antérieur sont présentés dans les documents CN 107 187 572 A, GB 2 045 708 A, et FR 2 669 886 A1.

Par ailleurs, on cherche à réduire la consommation en carburant des navires à moteur, et il est un besoin de proposer une solution d'aide à la propulsion qui tire son énergie de l'énergie de la houle.

### Bref exposé de l'invention

A cet effet, il est proposé ici un dispositif de propulsion et de conversion de l'énergie du mouvement des vagues selon la revendication 1.

Grâce à ces dispositions, la propulsion horizontale produite par le volet battant sert de nage à contre-courant pour contrer l'effet du vent local et/ou l'effet du courant marin et et/ou l'effet de la houle elle-même. En effet, avantageusement, la rotation oscillante du volet produit une propulsion de sens contraire à la direction de la houle. On utilise cette propulsion de résultante substantiellement horizontale, pour faire avancer la structure flottante à l'encontre de la houle (et aussi du courant et/ou du vent).

Avantageusement, lorsque la structure flottante est connectée à la partie arrière (i.e. la poupe), d'un bateau (e.g. navire, barge, etc.), la propulsion générée par la structure flottante peut amener à une réduction de la sollicitation des autres moyens de propulsion du bateau. Par exemple, lorsque le bateau est équipé d'un moteur à hélice comme premier moyen de propulsion, l'utilisation de la structure flottante à la poupe du bateau peut, avantageusement, réduire la consommation de carburant. Selon un autre avantage annexe, la quille oscillante peut être couplée à une génératrice (e.g. électrique) permettant de fournir en énergie électrique le bateau.

On note qu'en présence de houle, le volet vient forcer par rotation oscillante le mouvement relatif entre la quille et la structure flottante, permettant ainsi la récupération de l'énergie du mouvement des vagues. Par ailleurs, en réaction, le mouvement du volet est également forcé par le pilonnement relatif de la quille et la structure flottante, amenant à deux mouvements relatifs qui sont liées et s'amplifient mutuellement.

Dans un cas où la structure flottante est connectée à un élément d'ancrage, la propulsion générée peut contribuer à réduire l'effort exercé sur le point d'ancrage. Cette réduction de l'effort d'ancrage a l'avantage de permettre des solutions d'ancrage plus légères et moins coûteuses.

Dans divers modes de réalisation de l'invention, on peut éventuellement avoir recours en outre à l'une et/ou à l'autre des dispositions suivantes.

Selon l'invention, le système articulé comporte une liaison pivotante (A1) entre le volet (3) et la quille. Moyennant quoi, on obtient une liaison robuste et simple à mettre en oeuvre pour permettre le battement du volet relativement à la quille.

Selon une option, le système articulé peut comporter une liaison à bielle (4) entre le volet (3) et la structure flottante (1). Ceci forme une liaison mécanique simple et rustique et robuste qui ne nécessite pas d'entretien. Selon une option alternative, à la place d'un système à bielle, on pourrait avoir un guidage utilisant un coulissement d'axe dans des lumières ou un autre système de guidage auxiliaire.

Selon l'invention, le système articulé comporte un élément de liaison (4) connecté à la structure flottante (1) par une liaison pivotante (A2) et connecté au volet (3) par une liaison pivotante (A3). L'élément de liaison en question est assimilable à une bielle qui autorise un mouvement de pivotement du volet par rapport à la quille sans mouvements parasite important vis-à-vis de la structure flottante. En outre, ceci forme une liaison mécanique simple et rustique et robuste.

Selon une option, le volet (3) peut comprendre en outre une extension arrière de sa surface (8), ladite extension arrière étant connectée à une partie avant du volet (83) par une liaison pivotante (A8).

Ceci permet d'amplifier l'effet de propulsion, le battement de l'extension arrière étant en léger retard de phase par rapport au battement de la partie avant du volet

Selon une option, l'extension arrière (8) peut être rappelée à une position angulaire neutre vis-à-vis de la partie avant du volet (3) par un système de rappel à ressort.

Il s'agit d'un système simple et rustique, fiable et sans entretien. Le rappel à la position neutre contribue à l'efficacité de la propulsion à l'encontre de la houle.

Selon une option, le volet peut comprendre en outre une extension arrière de sa surface (8), ladite extension arrière étant flexible et fixée à la partie avant du volet. On utilise un bio-mimétisme pour produire ainsi un effet queue de baleine.

Selon une option, le volet (3) peut comprendre en outre une extension arrière de sa surface (8), connectée à une partie avant du volet (83) par une liaison pivotante (A8) ladite partie avant étant alors formée comme des bras de commande (36,37).

Selon une option, la quille peut comporter plusieurs volets (3,3+) agencés les uns en dessous des autres, montés de manière à rester parallèle entre eux. Moyennant quoi, les caractéristiques du site où est positionné le dispositif peuvent être prises en compte par le nombre de volet présent sur ladite quille. Cette disposition permet d'obtenir un dispositif plus compact en surface si un tirant d'eau suffisant est disponible, chaque volet étend plus petit individuellement mais les effets des volets s'additionnent en puissance.

Selon une option, il est prévu qu'une position au repos du volet est définie par un angle de référence, ledit angle de référence étant défini par une surface dudit volet et un axe longitudinal (X) perpendiculaire à la quille. Ceci permet, dans le cas d'un volet substantiellement plan, de rapprocher le corps principal du volet de la surface de l'eau.

Selon une option, il est prévu que ledit angle de référence est compris entre 0 et 30 degrés. Moyennant quoi, l'ajustement de l'angle de référence permet de positionner l'extrémité du volet au plus proche de la surface de l'eau où l'efficacité dudit volet est optimale.

Selon une option, le corps du volet s'étend principalement dans un plan de travail et la largeur transversale du volet va croissant en s'éloignant d'une zone où le système articulé relie le volet à la quille. Les parties les plus éloignées de l'articulation bénéficient d'un bras de levier plus important et on optimise ainsi leur effet par rapport à une surface de volet donnée.

Si la configuration au repos de référence est telle que le volet est « à plat », alors le plan de travail du volet est perpendiculaire à l'axe de pilonnement (Z).

Selon une option, la structure flottante et le volet sont fabriqués avec au moins un matériau composite. L'utilisation de ce type de matériau a l'avantage de permettre la réduction du poids total du dispositif, ainsi que son coût global.

Selon une option, il est prévu que le matériau composite peut être une matrice de polyépoxyde ou polyester comportant des fibres de carbone ou des fibres de verre. Moyennant quoi, cette solution présente de bonnes performances en robustesse mécanique et chimique.

Selon une option, le dispositif peut comprendre en outre au moins un moyen de transmission du mouvement relatif de ladite quille à au moins un convertisseur électrique pour convertir l'énergie mécanique dudit mouvement en énergie électrique, le dispositif présentant alors une fonction de conversion de l'énergie du mouvement des vagues. On note que le volet vient forcer par rotation oscillante le mouvement relatif entre la quille et la structure flottante, permettant ainsi la conversion de l'énergie du mouvement des vagues en un autre type d'énergie.

Selon une option, le dispositif comprend en outre une unité de commande (9) configurée pour piloter le taux de prélèvement de puissance par le convertisseur électrique de manière à arbitrer ainsi entre la propulsion produite par la nage à contre-courant et l'énergie de la houle transformée.

Le convertisseur électrique (via le moyen de transmission) constitue un frein au mouvement oscillatoire du volet. L'unité de commande peut moduler le prélèvement d'énergie pris par le convertisseur électrique pour conserver assez d'énergie pour la nage à contre-courant, selon les conditions actuelles de courant/vent/houle.

Selon une option, le dispositif peut être utilisable et efficace pour une gamme de périodes de houle. Moyennant quoi, le dispositif est mis à profit même lorsque la période de houle ne correspond à sa période propre et peut convertir l'énergie du mouvement des vagues sur une très large plage de période de houle.

La chaîne de conversion d'énergie peut agir comme un frein commandé en temps réel, simulant un ressort artificiel, qui permet de changer les périodes propres du système lorsqu'elle ne fonctionne pas en mode purement résistif (en plus d'agir comme un amortisseur, elle peut alors agir comme un ressort et comme une masse).

Selon une option, la gamme de périodes de houle peut être comprise en 3 et 16 secondes, de préférence comprise en 6 et 12 secondes.

Selon une option, le dispositif peut comporter comme moyen de transmission un vérin hydraulique (6).

Selon une option, le convertisseur électrique peut être un générateur électrique couplé à un moteur hydraulique.

Selon une option, le dispositif peut être connecté à au moins un élément d'ancrage, par exemple pour une bouée ou tout élément flottant à position substantiellement fixe. On réduit ainsi l'effort d'ancrage effectif ; on peut ainsi choisir des solutions d'ancrage plus légères et moins coûteuses. De plus, le dimensionnement réduit de l'ancrage, ainsi que de l'attache sur le dispositif conduisent à des solutions plus faciles à installer et donc moins onéreuses. Elles sont plus durables et subissent moins d'usure si on les compare à des ancrages passifs

Selon une option, le dispositif peut être fixé à l'arrière d'un bateau ou intégré à l'arrière d'un bateau. On parvient ainsi à réduire la consommation en carburant des navires à moteur avec une telle solution d'aide à la propulsion qui tire son énergie de l'énergie de la houle

Selon une option, le dispositif peut comporter un ressort de rappel entre la structure flottante (1) et la quille (2).

Selon une option, le volet peut présenter une forme rectangulaire ou triangulaire ou trapézoïdale.

Selon un autre aspect, il est proposé un dispositif de propulsion et de conversion de l'énergie du mouvement des vagues comprenant au moins une structure flottante (1) connectée à au moins un élément d'ancrage (16), au moins une quille (2) montée mobile sur la structure flottante, selon au moins un mouvement de coulissement par rapport à ladite structure flottante selon un axe de pilonnement (Z), au moins un moyen de transmission du mouvement relatif de ladite quille à au moins un convertisseur électrique pour convertir l'énergie mécanique dudit mouvement en énergie électrique,
caractérisé en ce qu'il comporte au moins un volet (3) relié par un système articulé (A1, A2, A3) à la quille et à la structure flottante (1), ledit volet étant configuré pour être positionné sous la surface de l'eau, agencé de façon à suivre les oscillations de ladite quille par rotation oscillante sous l'action des mouvements de vague, et de générer un effort de propulsion dirigé substantiellement en direction du centre de gravité de ladite structure flottante.

La plupart des caractéristiques optionnelles décrites plus haut peuvent être utilisées en combinaison avec le dispositif énoncé au paragraphe précédent.

Selon un autre aspect, il est proposé un dispositif de propulsion et de récupération de l'énergie de du mouvement des vagues comprenant :
- au moins une structure flottante (1 ;100)
- au moins une quille (2) montée mobile sur la structure flottante, selon au moins un mouvement de coulissement (GT) par rapport à ladite structure flottante selon un axe de pilonnement (Z),
caractérisé en ce qu'il comporte au moins un volet (8) relié par un système articulé (A1,A2,A3,A8) d'une part à la quille et d'autre part à la structure flottante (1), ledit volet étant configuré pour générer un effort de propulsion dirigé substantiellement en direction du centre de gravité de ladite structure flottante, et en ce que le système articulé comprend au moins un bras de commande (3,36,37) monté à rotation sur la quille par une première liaison pivotante (A1), et au moins une bielle (4,46,47) connectée à la structure flottante par une deuxième liaison pivotante (A2) et connectée audit(s) bras de commande par une troisième liaison pivotante (A3), le volet (8) étant monté à rotation sur le(s)dit(s) bras de commande grâce à une articulation (A8) agencée dans une position arrière en porte-à-faux par rapport à la troisième liaison pivotante (A3).

La plupart des caractéristiques optionnelles décrites plus haut peuvent être utilisées en combinaison avec le dispositif énoncé au paragraphe précédent, notamment le rappel élastique apliqué à l'articulation (A8) du volet.

### Exposé des figures

D'autres aspects, buts et avantages de l'invention apparaîtront à la lecture de la description suivante de plusieurs de ses modes de réalisation, donnés à titre d'exemples non limitatifs. L'invention sera également mieux comprise en regard des dessins joints sur lesquels :
La figure 1 est une vue schématique du dispositif de propulsion positionné en plein mer.
La figure 2 est vue schématique en coupe du dispositif de propulsion.
La figure 3 est une vue du dessus du dispositif de propulsion.
La figure 4 est un diagramme de fonctionnement d'un vérin hydraulique couplé à un moteur hydraulique.
La figure 5 présente une courbe de puissance de sortie en fonction de la période de la houle, ainsi que la propulsion horizontale disponible du fait de la nage à contre-courant.
La figure 6 présente une courbe de points de fonctionnement possibles suivant la commande d'arbitrage de prélèvement d'énergie.
La figure 7 illustre une variante concernant les moyens de transmission du mouvement relatif de la quille.
La figure 8 illustre, dans un ou plusieurs modes de réalisation, une vue en coupe d'une alternative du dispositif de propulsion.
La figure 9 illustre, dans un ou plusieurs modes de réalisation, une vue du dessus d'une alternative du dispositif de propulsion.
La figure 10 illustre, selon un mode de réalisation, l'intégration du dispositif de propulsion et/ou de conversion à une structure flottante de type bateau.
La figure 11 illustre, selon un autre mode de réalisation, une alternative à l'intégration du dispositif de propulsion et/ou de conversion à une structure flottante de type bateau.
La figure 12 illustre plus en détail une liaison pivotante à rappel élastique pour un volet réalisé en deux parties articulées.
La figure 13 présente un exemple de courbes de rendement du dispositif de propulsion suivant la période de la houle.

### Description détaillée

Sur les différentes figures, les mêmes références désignent des éléments identiques ou similaires. Pour des raisons de clarté de l'exposé, certains éléments peuvent ne pas être représentés à l'échelle.

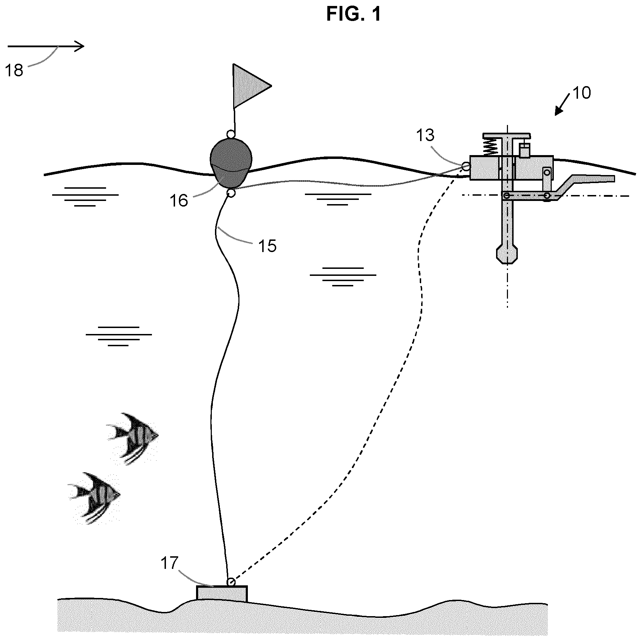

Sur la figure 1, un système houlomoteur **10** est positionné à proximité d'une bouée **16** en milieu marin.

Selon un premier exemple, le système houlomoteur **10** est attaché à la bouée servant de point d'ancrage **16** par une attache **13.** La bouée 16 est elle-même ancrée au fond marin, par exemple par une chaine **15** reliée à un lest **17** reposant au fond.

Dans la suite, on peut employer les termes « système houlomoteur », « dispositif houlomoteur » ou « machine houlomotrice » pour désigner l'entité repérée **10.**

Sous l'action de la houle, suivant le sens de celle-ci **18,** le système houlomoteur va se placer naturellement face au sens de la houle par rotation autour de la bouée **16.** Plus généralement, plusieurs phénomènes peuvent concourir à faire dériver le dispositif houlomoteur, il s'agit en particulier du vent local et/ou du courant marin local et/ou de la houle elle-même (induite par le vent).

Selon un autre exemple, la bouée peut s'affranchir d'un ancrage sur le fond marin par l'intermédiaire du raccord **15** directement attaché à une structure mobile immergée de plus grande inertie que le système houlomoteur **10.**

Selon un autre exemple, le système houlomoteur peut être dénué de tout point d'ancrage physique. Par exemple le système houlomoteur peut être pourvu de moyens de localisation GPS et d'un contrôleur ; dans ce cas, il est assigné au système houlomoteur une position GPS cible et un asservissement permet de maintenir, par la nage à contre-courant du volet, le système houlomoteur dans une position voisine de la position cible.

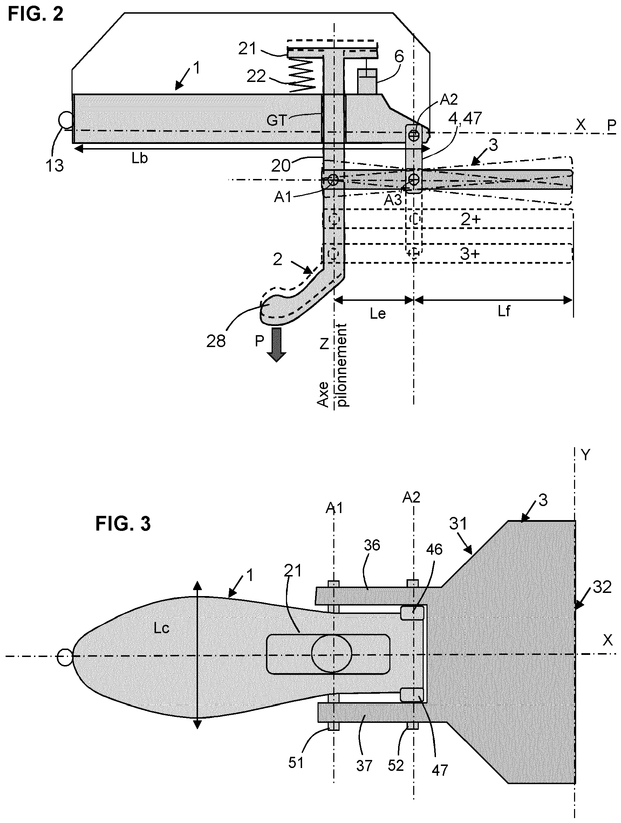

Comme illustré sur les figures 2 et 3, le système houlomoteur comprend une structure flottante **1** et une quille **2** capable de coulisser par rapport à la structure flottante **1** selon un axe de pilonnement **Z.** Le système houlomoteur comprend aussi un volet battant ou simplement appelé 'volet' repéré 3 qui sera vu plus loin.

### Structure flottante

Dans l'exemple illustré des figures 2 et 3, la structure flottante **1** peut-être de forme similaire à celle d'un bateau permettant d'être contraint au minimum par la houle, et dont la partie avant où est situé le point d'ancrage **13** permet de fendre les vagues. On définit pour la structure flottante un axe longitudinal noté **X** ainsi qu'un axe transversal noté **Y.**

De plus, la structure flottante **1** comporte un passage traversant situé à l'opposé du point d'ancrage **13,** et qui constitue la glissière translative GT accueillant la quille **2.**

La structure flottante est constituée d'une coque assurant la flottabilité et l'étanchéité de la structure, où l'aire de flottaison se situe entre 5 et 40 m2 pour une hauteur comprise entre 2 mètres et 6 mètres, et où la longueur **Lb** selon l'axe **X** est généralement plus grande que la largeur **Le** selon l'axe **Y.** Les dimensions doivent être adaptées pour assurer une flottaison lors de conditions environnementales difficiles, ainsi qu'aux contraintes liées au site d'accueil du dispositif **10,** comme par exemple la profondeur de l'eau. Plus précisément, les dimensions de la structure flottante peuvent être une aire de flottaison de 40 mètres carrés pour une hauteur de 6 mètres.

De plus, la coque de la structure flottante est fabriquée en matériau composite sur une armature métallique. Les matériaux composites peuvent être tous matériaux composites résistants aux conditions environnementales maritimes. A titre d'exemple, les matériaux composites sont des fibres de carbone ou fibres de verre incorporées dans une matrice d'un polymère thermodurcissable, comme par exemple le polyépoxyde ou le polyester. L'armature métallique est fabriquée à partir d'un métal ou d'un alliage métallique comme l'acier capable de résister aussi aux conditions environnementales maritimes, comme par exemple la force des vagues ou encore la corrosion engendrée par le milieu liquide.

La structure flottante peut être pleine ou creuse. Dans une configuration type, elle comporte des cavités, ces cavités sont utilisées pour héberger le dispositif de conversion d'énergie qui sera détaillée plus loin et qui est ainsi protégé des conditions climatiques environnementales.

Certaines des cavités peuvent aussi être occupées par des blocs de mousse alvéolaire de densité très inférieure à 1 (par exemple du polyuréthane expansé), en vue de conférer une bonne insubmersibilité à la structure flottante.

Avantageusement, la structure flottante et en particulier le dispositif de conversion d'énergie sont protégés des intempéries et des conditions climatiques, par exemple grâce à un capot, représenté symboliquement la figure 2.

### Quille

Comme illustré dans les figures 2 et 3, la quille **2,** située généralement à l'opposé du point d'ancrage **13** de la structure flottante 1, est capable de coulisser au travers de la structure flottante par l'intermédiaire de la glissière GT.

La quille **2** présente un corps principal allongé repéré **20** avec une extrémité haute et une extrémité basse, et les dimensions de la quille se situent dans une gamme de longueur de 3 à 15 mètres, pour une circonférence de 20 à 100 centimètres. Les dimensions de la quille **2** sont déterminées en fonction des dimensions de la structure flottante **1** et du volet **3,** ou encore en fonction de la profondeur de l'eau par exemple.

La quille **2** est fabriquée dans un matériau présentant une densité plus importante que celle de l'eau, et dont les propriétés physiques et chimiques permettent de résister aux conditions environnementales maritimes. A titre d'exemple, la quille peut être fabriquée à partir d'un métal ou d'un alliage métallique comme l'acier. L'extrémité basse de la quille constituant la partie immergée de la quille est préférentiellement recourbée et lestée afin de repositionner le centre de gravité du dispositif à la verticale du centre de poussée et ainsi garantir l'équilibre du système houlomoteur à la surface de l'eau.

À cet effet il est prévu un lest **28** agencé au voisinage de l'extrémité basse de la quille comme illustré à la figure 2. Ce lest **28** représente une masse significative et confère à la quille une masse et une inertie au mouvement supérieures à celles de la structure flottante.

L'extrémité haute constituant la partie non immergée de la quille est surplombée d'un plateau **21** qui s'étend transversalement par rapport à l'axe de pilonnement.

Il est prévu, de manière optionnelle, la présence de ressort de rappel 22 qui interagit entre la quille et la structure flottante.

Ce plateau 21 susmentionné est relié d'une part au ressort de rappel **22** et d'autre part à un vérin hydraulique **6.** Le vérin hydraulique peut être un vérin linéaire à double effet. Le cylindre du vérin hydraulique est fixé sur la structure flottante, et la tige du vérin hydraulique **6** permettant de transmettre effort et déplacement au piston est connectée au plateau **21** par une liaison articulée. Cette liaison articulée peut être une liaison pivot ou une liaison rotule. Ainsi, lors du mouvement translatif de la quille par rapport à la structure flottante généré par le mouvement des vagues, l'effort du mouvement de la quille est transmis au vérin hydraulique par l'intermédiaire de la tige du vérin entrainant une variation de pression du fluide du vérin hydraulique. Sous l'action du mouvement des vagues et du ressort de rappel **22,** la quille retourne en position basse transmettant un nouvel effort au vérin, et générant ainsi une nouvelle variation de pression qui peut être convertie en un autre type d'énergie. La raideur K du ressort de rappel influençant la fréquence propre oscillatoire du couple [quille, structure flottante], la raideur du ressort peut être déterminée en fonction des périodes de houle les plus fréquemment rencontrés sur le site d'installation cible.

Il faut noter que le ressort peut être un vrai ressort mécanique mais le rôle du ressort peut aussi être joué par la chaîne de conversion d'énergie comme il sera vu plus loin. Il est également possible de combiner les deux solutions, pour faire varier la raideur de façon dynamique.

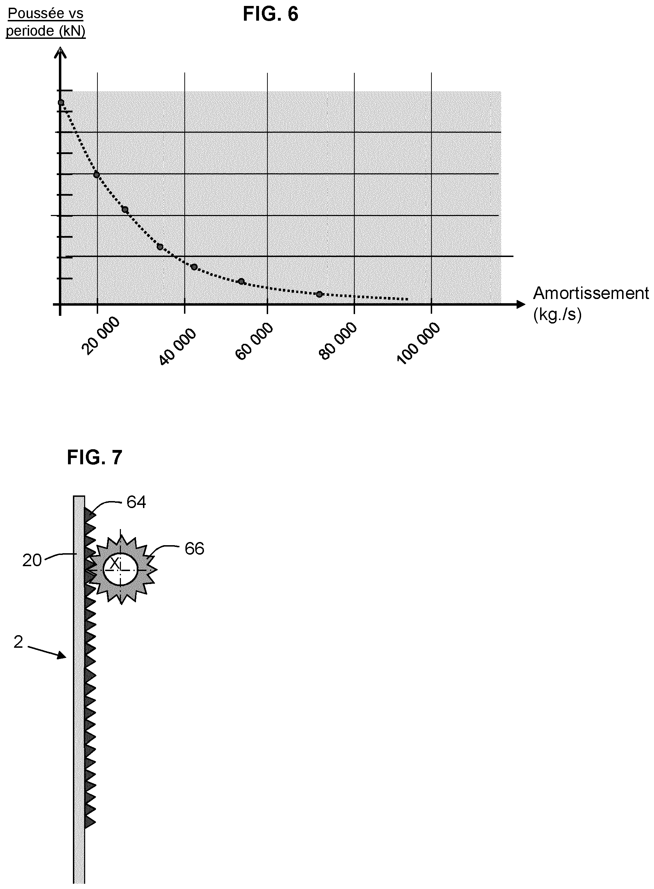

Selon un autre mode de réalisation, illustré à la figure 7, la quille est dépourvue d'un couplage à un vérin hydraulique, mais comporte une partie dentée **64** ou dite crémaillère qui est couplée à un pignon **66.** Lors du déplacement translatif de la quille sous l'action du mouvement des vagues, le corps principal **20** quille **2** transmet son mouvement translatif par l'intermédiaire de la crémaillère **64** au piston **66,** et devenant ainsi un mouvement rotatif. Ce mouvement rotatif peut être ensuite utilisé pour entrainer un alternateur d'un générateur électrique afin de convertir l'énergie mécanique en énergie électrique par exemple.

### Volet battant

Suivant un mode de réalisation, il est prévu, outre la quille et la structure flottante, un volet **3.** Le volet **3** en question peut être qualifié de 'oscillant' ou 'battant' ; dans le jargon anglo-saxon il est appelé `flap'. Comme il sera vu dans la suite, le volet **3** peut se présenter comme une seule pièce ou bien en deux pièces articulées entre elles, sans exclure toutefois d'autres configurations.

Le volet **3** se présente comme une structure de faible épaisseur s'étendant principalement dans deux directions (plan du volet, plan de travail du volet) avec une faible épaisseur selon la troisième direction. L'épaisseur du volet peut varier entre le bord d'attaque **31** et le bord de fuite **32** à la manière d'un aileron aérodynamique.

Selon une variante, le volet ne s'étend pas forcément dans un seul plan mais il peut y avoir un effet de décroché comme illustré à la figure 1.

Le volet **3** est relié par un système articulé à la quille et à la structure flottante. Le volet **3** est positionné sous la surface de l'eau. La forme du volet peut être rectangulaire, triangulaire ou trapézoïdale. A titre d'exemple, la forme du volet peut être similaire aux queues des mammifères marins, comme le dauphin ou la baleine par exemple. Le volet **3** présente des dimensions où la longueur selon l'axe **Y** est plus grande que la largeur selon l'axe **X.** L'épaisseur du volet est définie de façon à être cohérente avec les autres grandeurs, notamment du point de vue de la résistance aux efforts subis par les vagues.

Les dimensions du volet **3** doivent être adaptées aux dimensions de la structure flottante **1** et de la quille **2,** eux-mêmes adaptés aux conditions environnementales et aux contraintes du site. Les dimensions du volet se situent dans une gamme de de 4 à 20 mètres pour les longueurs, de 2 à 9 mètres pour les largeurs, et pour une hauteur pouvant aller jusqu'à 65 centimètres. Plus précisément, les dimensions sont de 20 mètres pour la longueur située à l'extrémité du volet, 8 mètres pour la largeur, et 65 centimètres pour la hauteur.

Suivant un mode de réalisation, le volet peut être réalisé en acier ou en matériaux composites (type plastique à fibre de verre ou de carbone) ou une combinaison des deux. La réalisation en matériaux composites permet de configurer au volet une certaine souplesse, en contrôlant notamment l'agencement des fibres le long de la corde. Cette souplesse optimise l'aspect propulsif, à la manière d'une palme.

Suivant un mode de réalisation, le volet peut avoir un profil d'aile d'avion.

Comme dans l'illustration des figures 2 et 3, le volet **3** est connecté à la quille **2** par une liaison pivotante **A1.** À cet effet, le volet comporte deux bras **36,37** agencés de manière généralement symétrique par rapport à l'axe longitudinal **X** et qui s'étendent à partir du corps principal du volet en direction de la quille en dessous et sur les côtés de la structure flottante. Il est prévu un arbre d'axe **51** qui traverse de part en part la quille et chacun des bras **36,37** du volet. Il faut remarquer que les bras pourraient être plus resserrés que sur l'exemple représenté aux figures et pourraient être adjacents au corps principal **20** de la quille.

Par ailleurs le volet **3** est connecté à la structure flottante par une liaison à bielle. Dans l'exemple illustré il s'agit d'une bielle **4** classique. À une de ses extrémités, ladite bielle 4 est connectée à la structure flottante 1 par une liaison pivotante (axe **A2**) au moyen d'un arbre d'axe **52** et à l'autre de ses extrémités, la bielle est connectée au volet **3** par une autre liaison pivotante (axe **A3**). Selon un autre exemple, la bielle **4** peut se décomposer en deux bielles **46** et **47.** Un tel agencement peut permettre de maintenir la stabilité du volet et permet de reprendre des efforts de torsion qui peuvent être exercés sur le volet par l'eau.

L'exemple décrit ci-dessus forme un système articulé qui relie le volet 3 à la fois à la quille et à la structure flottante. Bien entendu, d'autres solutions de système articulé permettent de relier le volet à la quille et à la structure flottante en permettant une rotation d'axe horizontal parallèle à Y (donc un battement d'axe horizontal).

L'axe de rotation de la liaison **A3** est situé à une distance **Le** de l'axe de rotation du point pivot **A1.** L'axe de rotation de la liaison **A3** est situé à une distance **Lf** du bord de fuite **32** du volet. La distance **Le** peut être voisine de la longueur de la bielle **4** (distance A2 - A3), ou un peu supérieure.

De plus, selon une option, la position du volet au repos de référence, c'est-à-dire sans houle, est définie selon un angle de référence entre l'une des surfaces présentant la plus grande superficie et un axe X perpendiculaire à la quille. Cet angle de référence est compris entre 0 et 30 degrés.

Grâce à ces dispositions, sous l'influence de la houle, le volet **3** vient osciller par rotation oscillante autour de la liaison pivot **A1** suivant le mouvement des vagues. Ce mouvement rotatif a pour conséquence de venir forcer le pilonnement relatif de la quille **2** par rapport à la structure flottante 1 selon l'axe **Z.**

Le mouvement de la houle consiste, localement à l'endroit de la position de la machine houlomotrice, en une succession de montées et de descentes de la surface de l'eau. Ce mouvement peut être considéré, au regard du temps, comme quasi sinusoïdal.

Avantageusement, la machine houlomotrice est prévue pour réagir à ce mouvement oscillatoire de la surface de l'eau. Pour cela on considère une gamme de périodes de houle, allant typiquement de 4 secondes à 12 secondes, à savoir une fréquence de 0,08 à 0,25 (en cycles par seconde), dans laquelle se trouve un ou plusieurs modes propres d'excitation du mouvement relatif de la quille par rapport à la structure flottante.

Plus précisément, pour une fréquence d'excitation pas trop éloignée d'un des modes propres, lorsque la surface de l'eau monte, le volet ainsi que la structure flottante s'élèvent par rapport à la quille (laquelle représente une inertie importante au déplacement), et donc la quille va également s'élever mais avec un certain retard. Dans la deuxième partie du cycle, à savoir quand la surface redescend, la structure flottante et le volet s'abaissent par rapport à la quille qui représente une inertie au déplacement, et donc la quille va également baisser mais avec un certain retard.

Le retard constaté dans le mouvement de la quille par rapport au volet et à la structure flottante induit donc un mouvement relatif oscillatoire de la quille par rapport à la structure flottante. Ce mouvement est aussi grossièrement sinusoïdal.

On obtient des rendements optimaux lorsque le retard du mouvement oscillatoire de la quille par rapport à la structure flottante est suffisant.

Suivant les configurations, un retard supérieur à 45° donnera déjà un bon du mouvement oscillatoire et suivant les configurations, un optimum peut être constaté avec un retard qui peut aller de 90° à 180°.

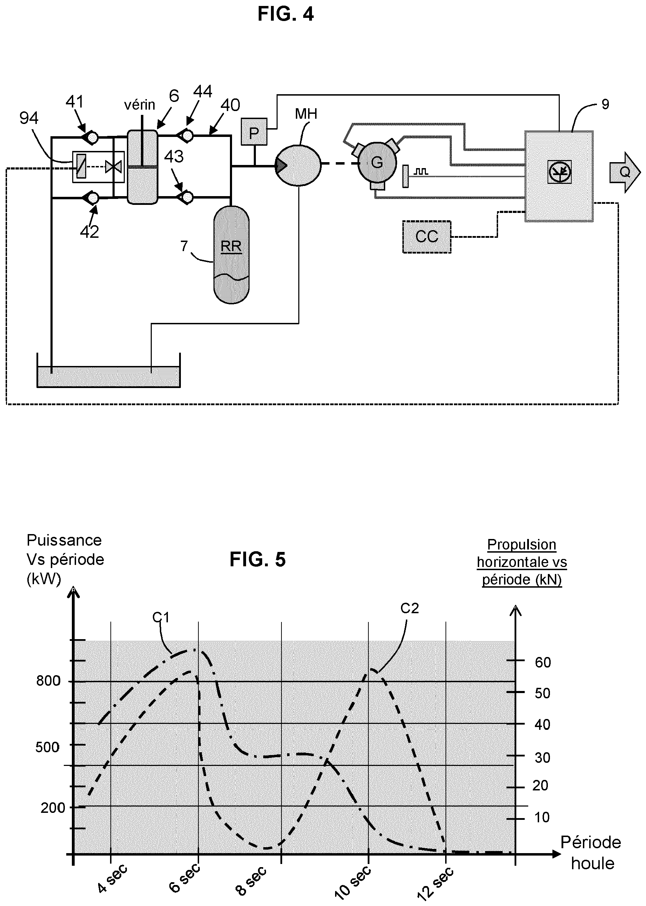

En référence à la figure 2, lorsque le volet et la structure flottante montent par rapport à la quille, le ressort **22** se comprime et la tige du piston descend. À l'inverse, lorsque le volet et la structure flottante descendent par rapport à la quille, le ressort **22** s'allonge et la tige du piston monte. Le mouvement alternatif du piston est converti en énergie hydraulique par un système typiquement représenté à la figure 4 (voir plus loin).

Pour des périodes de houle très longues, donc avec une fréquence d'excitation significativement plus basse, le retard de la quille est moins important et aussi par conséquent le mouvement relatif entre la quille et la structure flottante ce qui conduit à une efficacité moindre.

À l'autre bout de l'échelle, pour des périodes de houle plus courtes, donc avec une fréquence d'excitation significativement plus élevée, le retard de la quille est plus important, pour aller jusqu'à 180° ou plus (opposition de phase) mais l'amplitude des mouvements est alors plus réduite ce qui conduit également à une efficacité moindre.

On peut faire une analogie entre le système décrit ci-dessus et l'excitation d'un système masse-ressort qui forment un système oscillatoire amorti du second degré. La raideur physique du ressort (ou la raideur apparente lorsque le ressort est constitué par un frein commandé en temps réel) participe à la définition de la fréquence propre principale des fréquences propres s'il peut y en avoir plusieurs.

Par l'oscillation périodique du volet **3,** on provoque un pompage hydraulique grâce au vérin hydraulique **6** double effet qui alimente un réservoir accumulateur hydraulique. La pression accumulée est ensuite utilisée pour activer un moteur hydraulique **MH** couplé à un générateur électrique **G,** illustré en figure 4.

L'oscillation périodique du volet **3** permet de générer une propulsion par rotation oscillante à contre-courant de la houle 18, comparable à la propulsion générée par les queues des mammifères marins. Cette propulsion à contre-courant de la houle permet de réduire l'effort exercé sur l'ancrage par le dispositif **10** qui dérive en s'éloignant du point d'ancrage **16.**

La figure 4 présente un système de conversion de l'énergie Hydraulique / électrique générée par le mouvement des vagues. Lors du déplacement du vérin linéaire à double effet **6** sous l'effet du déplacement de la quille **2,** une montée en pression est générée dans le circuit hydraulique **40.** Le vérin linéaire à double effet permet de générer une pression que ce soit lors de la montée de la quille ou la descente de celle-ci. Le maintien de cette pression à la montée comme à la descente est assuré par les clapets anti-retours **41** ; **42** ; **43** ; **44.** La pression générée est dirigée via le circuit hydraulique vers un accumulateur hydraulique **7** utilisé comme un tampon. La production d'énergie est assurée par l'alternateur **G** entrainé par le moteur hydraulique **MH** sous l'effet de la pression dans le circuit hydraulique **40,** et maintenue continûment par l'accumulateur hydraulique 7.

L'alternateur **G** est piloté par une unité de commande **9.** Cette unité de commande **9** est configurée pour piloter le taux de prélèvement de puissance par le convertisseur électrique associé à l'unité de commande.

Il peut être prévu, en aval de l'alternateur **G** un convertisseur électrique pour délivrer une puissance électrique **Q** sous la forme désirée (continu, alternatif, consommation locale, livraison à distance, etc.

La puissance électrique produite correspond à un travail mécanique prélevé sur le mouvement oscillatoire de la quille. Plus la puissance prélevée est importante plus cela réduit l'amplitude du mouvement oscillatoire de la quille. Par conséquent plus la puissance prélevée pour produire de l'électricité est élevée, moins la résultante de propulsion pour la nage à contre-courant est élevée. Il faut donc pratiquer un compromis entre la puissance électrique prélevée et le besoin de nage à contre-courant pour soulager le dispositif d'ancrage.

On note que dans certaines configurations, on utilise l'énergie électrique pour faire fonctionner une installation de désalinisation de l'eau par osmose inversée.

Comme illustré sur la figure 4, le système peut comprendre un capteur de course noté **CC** capable de mesurer la position de la quille par rapport à la structure flottante en temps réel. L'unité de commande **9** peut ainsi connaître l'amplitude et la fréquence du mouvement oscillatoire de la quille relativement à la structure flottante. Grâce à ces informations, l'unité de commande 9 peut ajuster en temps réel le prélèvement de puissance pour la chaîne de production d'électricité afin d'ajuster les paramètres de la chaîne de conversion à savoir ajuster la raideur apparente et le coefficient d'amortissement.

Dans la version illustrée de la figure 4 qui utilise un système hydraulique, on prévoit une électrovanne de by-pass proportionnel **94** qui permet d'ajuster en temps réel le taux de prélèvement de travail oscillatoire du volet et de la quille.

L'unité de commande pilote l'électrovanne **94** de manière proportionnelle. Lorsque l'électrovanne est ouverte, le fluide hydraulique passe d'une chambre du vérin à l'autre librement sans prélèvement de travail. À l'inverse, lorsque l'électrovanne **94** est fermée, tout le fluide hydraulique est pompé par le piston du vérin à double effet. Bien entendu, pour des ouvertures partielles et contrôlées de l'électrovanne, on a un prélèvement partiel de travail correspondant.

Dans mode de réalisation tout électrique illustré à la figure 7, il n'y a pas de vanne mais c'est directement la commande de l'alternateur **G** par l'unité de commande **9** qui produit un couple résistant ayant tendance à freiner le mouvement oscillatoire de la quille. Bien entendu le couple résistant est ajusté en temps réel en fonction des critères susmentionnés comme le besoin de prélèvement pour la production d'électricité, le besoin de propulsion de nage à contre-courant, et le maintien d'une raideur apparente dans une fenêtre acceptable.

Grâce à des fonctions logicielles, l'unité de commande peut ajuster la puissance électrique prélevée et ainsi arbitrer ainsi entre la propulsion produite par la nage à contre-courant et l'énergie de la houle transformée en électricité.

La figure 5 illustre un exemple d'une part une courbe **C1** de puissance électrique disponible en fonction de la période de la houle sur le convertisseur ainsi que une courbe de puissance **C2** représentative de la propulsion substantiellement horizontale contribuant à la nage à contre-courant.

Sur la courbe **C1,** la puissance électrique effectivement convertie dépend de la période de houle, elle est maximale pour une période proche de 6 secondes. Cette courbe reflète le comportement d'une chaîne de conversion purement résistive, telle que celle décrite en figure 4.

La courbe **C2** est obtenue pour le même système que la courbe **C1,** mais avec 0 production d'énergie. Deux pics de production de propulsion sont observables, à 6 secondes et à 9,5 secondes, et qui correspondent à deux modes propres du système. Le premier (à 6 secondes) peut être décrit comme le mode propre en tangage de la structure flottante **1.** Ce mode propre excite l'oscillation du volet **3** qui est à l'origine de la propulsion produite. Le deuxième, à 9,5 secondes, peut-être décrit comme le mode propre en pilonnement de la structure flottante **1.** Il excite dans des proportions encore plus importantes l'oscillation du volet **3.** La valeur de la propulsion résultante est cependant assez proche pour ces deux modes, pour le système décrit par **C1** et **C2.**

De plus, comme pour la courbe **C2,** avec une chaîne de conversion réactive, l'emplacement de ces pics de propulsion peut être positionné en fonction de la période de la houle incidente.

Selon un exemple de réalisation cible, la machine houlomotrice peut être dimensionnée pour générer une puissance nominale de 400 kW ; (Déplacement : de 150 à 200 tonnes) avec un tirant d'eau de 14 m. Les dimensions volet oscillant (flap) : 8m x 20m, poids apparent nul dans l'eau (densité équivalente voisine de 1). Les dimensions flotteur peuvent être : aire à la flottaison 40m2, hauteur totale 6m.

L'énergie électrique produite peut être utilisée pour alimenter des dispositifs électriques à bord (unité de commande 9 et accessoires). L'énergie électrique produite peut être utilisée à distance moyennant un transport par câble reliant la machine houlomotrice à un site distant ou vers un réseau de distribution électrique.

Selon une variante particulière, l'énergie électrique produite à bord peut être utilisée pour des besoins de désalinisation de l'eau de mer.

Selon une autre variante, l'énergie produite par l'oscillation relative de la quille et du flotteur peut être utilisée directement pour des besoins de désalinisation sans forcément être converti en énergie électrique. Par exemple, en pompant de l'eau de mer à travers une membrane à osmose inverse.

La figure 6 illustre un exemple de courbe des points de fonctionnement dans le cas d'une vague incidente de 6 secondes, et correspondant au premier pic des courbes **C1** et **C2** illustrées figure 5. En effet, comme mentionné ci-dessus, l'unité de commande peut contrôler en temps réel le prélèvement de puissance, en contrôlant la quantité d'énergie électrique convertie. L'énergie qui n'est pas convertie se présente sous la forme de la propulsion horizontale du volet oscillant. Ainsi, les points les plus à gauche sur la courbe de la figure 6 représentent un taux de prélèvement faible et une maximisation de la nage à contre-courant alors qu'à l'inverse les points qui se situent à droite sur la courbe correspondent aux deux prélèvements élevés (taux d'amortissement élevé) avec une amplitude du volet oscillant beaucoup plus faible et par conséquent une puissance de nage à contre-courant plus faible.

Le pilotage et l'arbitrage peuvent être réalisés localement ou bien opérés à distance depuis par exemple un centre de commande dans le cas d'une ferme marine de machines houlomotrices.

Il faut remarquer que le mouvement de la quille par rapport au corps flottant peut être strictement une translation comme illustré aux figures, mais selon une variante non représentée, le mouvement de la quille pourrait comporter une autre composante dans le cas où par exemple elle est montée à rotation par rapport à un point d'articulation du corps flottant situé à bonne distance avec un rayon de courbure assez conséquent.

S'agissant de la position de référence du volet, formant la position de repos et définissant l'angle prédéterminé susmentionné, il faut remarquer que cette position de référence peut être réglable au moyen d'un dispositif d'ajustement par exemple un dispositif de vis-écrou qui déplace verticalement la position de l'axe **A2,** ce dispositif peut être réglé une fois tout pour toute pour le site cible ou bien être commandé par l'unité de commande **9.** Pour déplacer la position de l'axe **A2,** on peut aussi utiliser une came excentrique dont la position angulaire est commandée.

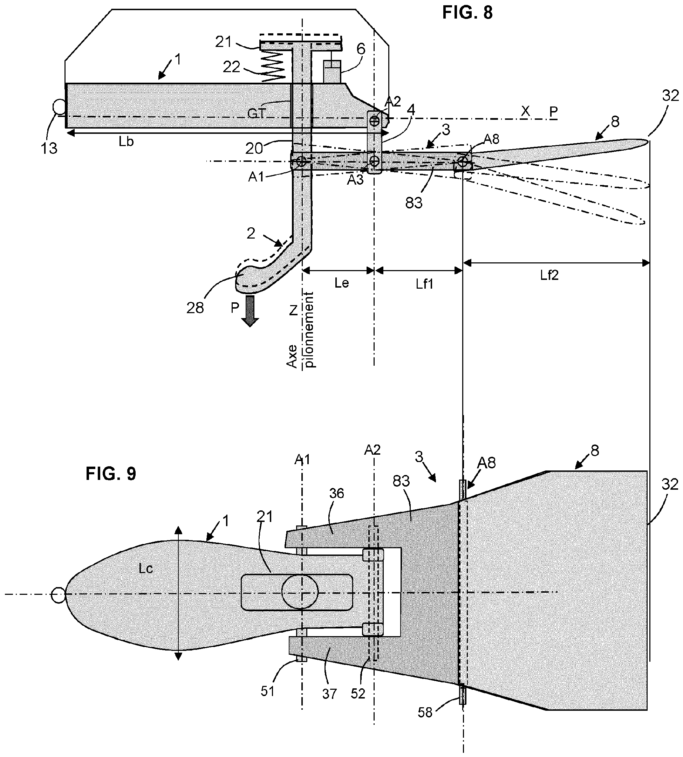

Les figures 8 et 9 illustrent, dans un ou plusieurs modes de réalisation, une alternative au système houlomoteur présenté aux figures 2 et 3.

Les éléments structurels (e.g. quille, volet, etc.), leurs propriétés physiques et chimiques, ainsi que leurs configurations d'agencement présentés en figures 2 et 3 peuvent être, partiellement ou totalement, transposables à ce mode de réalisation.

Dans ce mode de réalisation, le volet **3** est réalisé en deux parties et comprend une extension arrière **8,** qui vient compléter une portion repérée ici **83** qui est articulée d'une part à la quille (en A1) et d'autre part à la structure flottante (en A2, A3). Autrement dit, dans cette configuration, le volet **3** est formé par une portion avant **83** et une extension arrière **8.**

Par exemple, le bord avant de l'extension arrière **8** est connecté par une liaison pivotante selon un axe de rotation **A8** à la portion avant **83.** Un arbre d'axe ou une charnière **58** peuvent être utilisés pour réaliser ce montage à rotation.

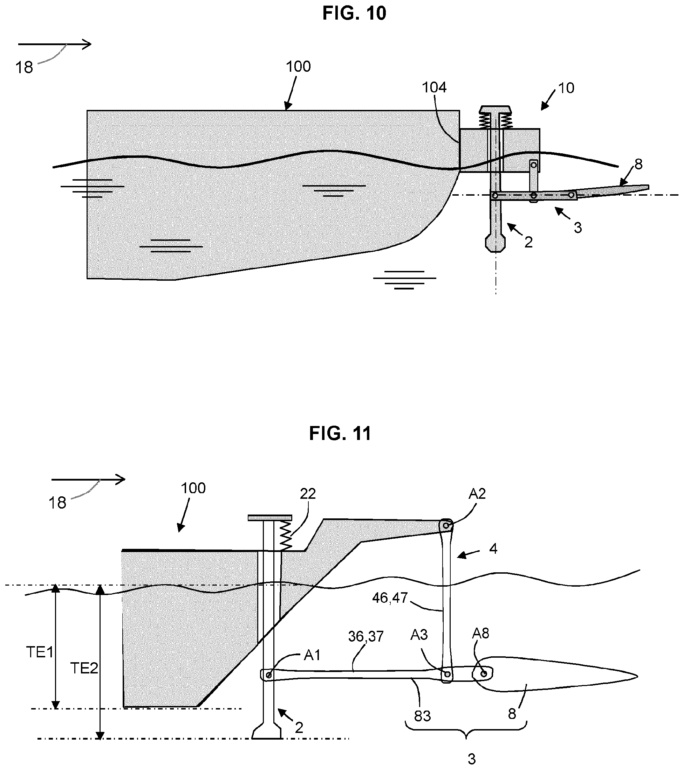

Dans une variante représenté à la figure 11, la portion avant **83** peut être formée comme un ou deux bras de commande **36, 37,** la fonction volet étant fortement réduite pour lesdits bras, les bras de commande étant alors destinés à transmettre les efforts principaux exercés sur l'extension arrière **8** vis-à-vis de la quille et de la (des) bielle(s).

Dans l'exemple illustré, cette extension arrière **8** est peut être considérée comme un volet supplémentaire rattaché à la portion avant **83 du** volet **3,** et qui vient compléter le profil aérodynamique la portion avant **83.** Suivant leurs surfaces respectives de portion avant **83** et de l'extension arrière **8,** les contributions de chacun à l'effort hydraulique peuvent être plus ou moins grandes.

Dans ce mode de réalisation, l'axe de rotation de la liaison **A3** est situé à une distance **Le** de l'axe de rotation du point pivot **A1.** L'axe de rotation de la liaison **A3** est situé à une distance **Lf1** de l'axe de rotation de la liaison **A8.** L'axe de rotation de la liaison **A8** est situé à une distance **Lf2** du bord de fuite **32** de l'extension **8.** La distance **Le** peut être voisine de la longueur de la bielle **4,** ou un peu supérieure.

Grâce à ces dispositions, sous l'influence de la houle, l'extension arrière **8** vient osciller par rotation oscillante autour de la liaison pivot **A8** suivant le mouvement des vagues. Cette rotation oscillante combinée à la rotation oscillante de la portion avant **83** du volet 3 autour de l'axe **A1** permet de renforcer la propulsion et le pilonnement relatif de la quille 2 par rapport à la structure flottante 1 selon l'axe Z.

On note que le volet a généralement deux degrés de liberté en rotation. Un premier degré de liberté concerne le pivotement de la portion avant **83** par rapport à la quille (autour de A1). Un deuxième degré de liberté concerne le pivotement de l'extension arrière **8** par rapport à la portion avant **83** (autour de A8). L'oscillation du deuxième degré de liberté (autour de A8) est de type sinusoïdale et est en retard de phase par rapport à l'oscillation du premier degré de liberté (autour de A1) également de type sinusoïdal.

### Montage sur embarcation

La figure 10 illustre, selon un mode de réalisation, l'intégration du dispositif de propulsion et/ou de conversion à une structure flottante de type bateau/navire/embarcation.

Les éléments structurels (e.g. quille, volet, etc.), leurs propriétés physiques et chimiques, ainsi que leurs configurations d'agencement présentés en figures 2 et 3 ou figure 8 et 9 peuvent être, partiellement ou totalement, transposables à ce mode de réalisation.

Dans ce mode de réalisation, le système houlomoteur **10** est attaché, directement ou indirectement à la poupe **104** d'un bateau **100** par des moyens de fixations.

Par directement, il peut être compris qu'au moins une des parois de la structure flottante est en contact avec au moins l'une des parois du bateau **100.**

A l'inverse, par indirectement il peut être compris que les parois de la structure flottante **1** et du bateau **100** ne sont pas directement en contact, et le sont par un élément intermédiaire.

Dans un exemple, la structure flottante **1** peut être fixée à une plaque arrière ou un plat bord arrière du bateau **100.** On peut ainsi équiper le bateau à posteriori, voire installer ou retire le système houlomoteur **10** en fonction du besoin.

Dans l'exemple illustré, le navire **100** présente des dimensions conséquentes par rapport aux dimensions de la quille et du volet. Cependant, des dimensions d'embarcation plus petites peuvent aussi convenir.

On remarque qu'avantageusement, la quille 2, même dans sa position la plus basse de dépasse par du fond de la coque du bateau vers le bas. Autrement dit, l'adjonction du système houlomoteur **10** sur le bateau n'accroit pas le tirant d'eau de l'ensemble.

La figure 11 illustre, selon un autre mode de réalisation, une alternative à l'intégration du dispositif de propulsion et/ou de conversion à une structure flottante de type bateau.

Les éléments structurels (e.g. quille, volet, etc.), leurs propriétés physiques et chimiques, ainsi que leurs configurations d'agencement présentés en figures 2 et 3, ou figures 8 et 9 peuvent être, partiellement ou totalement, transposables à ce mode de réalisation.

Dans ce mode de réalisation, la quille **2** du système houlomoteur est directement intégrée à la poupe du bateau **100** (i.e. l'arrière du bateau) en la traversant de part en part. Ainsi, la structure flottante **1** est confondue avec la coque structurelle du navire **100.**

Ainsi, comme décrit précédemment, l'extrémité haute de la quille constituant la partie non immergée de la quille peut être reliée par l'intermédiaire d'un plateau à un ressort de rappel **22.** Selon une alternative, le plateau peut être relié à un vérin hydraulique tel qu'il est décrit précédemment.

Dans ce mode de réalisation, le volet **3,** positionné sous la surface de l'eau, est relié selon un système articulé précédemment décrit en figures 2 et 3 ou en figures 8 et 9.

Selon un exemple, le volet **3** est défini par une extension arrière **8** connecté à une partie avant **83** du volet **3** qui se résume ici à un bras de liaison.

L'extension arrière est reliée au bras de liaison **83** par la liaison pivotante **A8.** Le bras de liaison **83** est connecté à la quille **2** selon la liaison pivotante **A1.**

Par ailleurs le volet **3** peut être connecté à l'extrémité de la poupe du bateau par une ou plusieurs liaisons à bielle **46, 47,** par exemple, une sur chacun des bras du volet **(36, 37).** Dans l'exemple illustré il s'agit de bielles classiques. À l'une de ses extrémités, chacune des bielles peut être connectée à l'extrémité de la poupe du bateau par une liaison pivotante **A2** au moyen d'un arbre d'axe. A l'autre de ses extrémités, chacune des bielles peut être connectée au bras **83** du volet **3** par la liaison pivotante **A3.**

Selon un autre point de vue, on peut considérer que ladite extension arrière **8** forme elle-même entièrement le volet battant propulseur. Alors le système articulé qui relie le volet à la quille et à la structure flottante comprend :
- deux bras de commande **36,37** montés à rotation sur la quille par une articulation baptisée première liaison pivotante A1, de préférence attachés de part et d'autre de la quille.
- deux bielles **46,47** connectée à la structure flottante par une articulation baptisée deuxième liaison pivotante **A2** et connectée auxdits bras de commande par une articulation baptisée troisième liaison pivotante A3.

Le volet **8** est lui monté à rotation sur lesdits bras de commande grâce à une articulation rotative d'axe A8 agencée dans une position arrière en porte-à-faux par rapport à la troisième liaison pivotante **A3.**

On note qu'il pourrait y avoir un seul bras de commande au lieu de deux, et une seule bielle au lieu de deux bielles.

Toutefois, préférentiellement on dispose un bras de commande gauche et bras de commande droite, disposés symétriquement par rapport à un axe longitudinale **X** du navire 100. De même, on dispose une bielle gauche et une bielle droite, disposées symétriquement par rapport à l'axe longitudinale **X.** Ceci permet de reprendre des efforts de torsions autour de l'axe longitudinale **X,** en cas de déséquilibre des pressions droite/gauche sur le volet.

Les bras de commande **36,37** sont des pièces allongées capables de supporter des efforts de flexion importants, notamment dans la partie en porte-à-faux (segment **A3** - **A8**). Ces bras peuvent être réalisés en métal ou en composite haute performance mécanique. Leur profil et leur section sont optimisés pour encaisser les efforts de flexion, torsion, et traction.

Les bielles **4,** en position moyenne sensiblement verticales, travaillent surtout en traction et compression. Les bielles 4,**46,47** sont réalisées en métal ou en composite haute performance mécanique.

Pour le volet **8,** tant pour ses formes que sa structure et sa matière, les caractéristiques énoncées pour le volet battant dans tout ce qui précède s'appliquent ici.

On note **TE2** l'écart entre la position extrême basse de la quille **2** et le niveau moyen de la surface de l'eau, il s'agit du tirant du système de propulsion houlomoteur.

On note **TE1** l'écart avec le point le plus bas de la coque et le niveau moyen de la surface de l'eau, il s'agit du tirant du bateau lui-même, pour un chargement utile donné.

Selon un exemple, **TE2-TE1** est inférieur à 1m, de préférence inférieur à 50cm.

Préférentiellement, **TE2** peut être inférieur à **TE1,** i.e. la présence du système houlomoteur n'accroît pas le tirant d'eau du navire **100,** comme représenté à la figure **10****.**

Ainsi avantageusement, l'intégration de la quille à la poupe d'un bateau n'impacte pas ou que modérément le tirant d'eau qui reste principalement gouverné par la charge du bateau.

Dans un exemple illustré à la figure 11, la distance séparant les articulations A1 et A3 est supérieure à 6 m ; elle peut être comprise entre 8 m et 10 m. La partie arrière du volet de retrouve immergée dans 2 à 3 mètres de hauteur d'eau.

Comme déjà évoqué et expliqué, on peut avoir un système de conversion d'énergie, agencé fonctionnellement en parallèle du ressort 22.

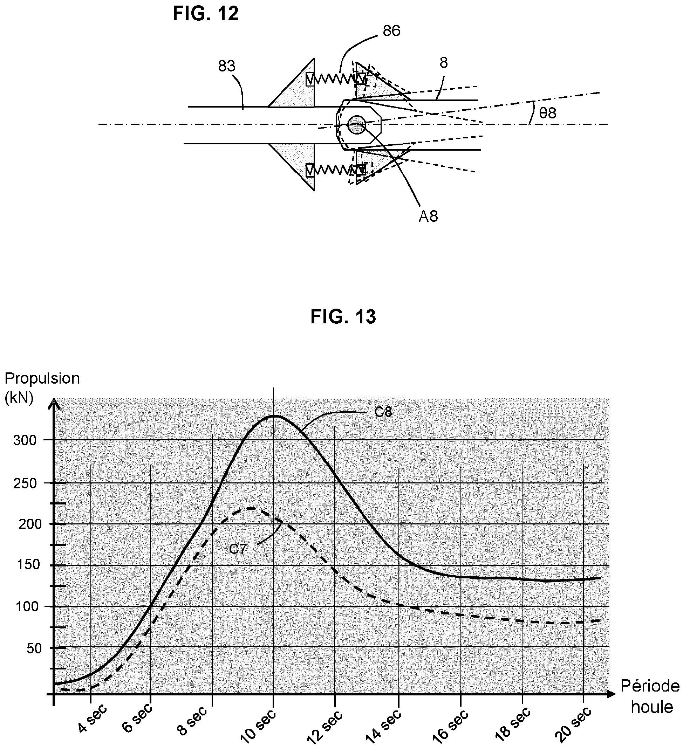

La figure 12 illustre, dans un ou plusieurs modes de réalisation illustrés notamment aux figures 8 à 11, une liaison pivotante entre la partie avant **83** du volet **3** (respectivement les bras **36,37**) et l'extension arrière **8,** avec une fonction de rappel élastique.

Selon cette fonction, la partie avant du volet **83** est connectée par la liaison pivotante **A8** à l'extension arrière **8** et comprend un ou plusieurs ressorts de rappel **86.**

Les ressorts sont agencés de manière à ce que pour chaque ressort, une extrémité du ressort est fixée sur partie avant **83** du volet, et l'autre extrémité est fixée sur l'extension arrière 8. On utilise dans l'exemple illustré des ressorts de compression.

En position de repos, c'est-à-dire sans mouvement de vague, les ressorts sont compressés permettant de maintenir le bras **83** aligné avec l'extension arrière **8.**

Lors du mouvement de vague, l'extension arrière **8** oscille par rotation oscillante autour de la liaison pivotante **A8,** la force de rappel des ressorts permet alors de rappeler l'extension arrière **8** à une position angulaire neutre par rapport à la partie avant **83** du volet.

En outre, il est possible de monter sur le volet **3** une butée angulaire de manière à maintenir l'angle **θ8** dans une certaine plage angulaire. De manière préférence l'angle **θ8** est compris entre +30 et -30 degrés.

En lieu et place du ressort de compression, la fonction de rappel élastique pourrait être obtenue par un ou plusieurs ressort(s) de traction ou un ressort de torsion (e.g. barre de torsion).

La figure 13 illustre un exemple de résultat pour un volet de grande taille, notamment dans la configuration de la figure 11. Toute l'énergie houlomotrice récupérée est transformée en propulsion (la conversion électrique est nulle ou marginale). La courbe **C8** illustre la résultante de propulsion avec le volet en deux parties (i.e. avec l'articulation **A8** fonctionnante), La courbe **C7** illustre la résultante de propulsion avec le même agencement de volet mais avec l'articulation **A8** bloquée. Pour la courbe **C8** le meilleur rendement est obtenu aux alentours d'une période de houle de 10 secondes. Pour la courbe **C7** le meilleur rendement est obtenu aux alentours d'une période de houle de 9 secondes mais il est substantiellement plus bas que celui de la courbe C8, ce qui souligne l'effet contributeur de l'articulation **A8.**

## Revendications

1. Dispositif (10) de propulsion et de récupération de l'énergie du mouvement des vagues comprenant :
- au moins une structure flottante (1;100)
- au moins une quille (2) montée mobile sur la structure flottante, selon au moins un mouvement de coulissement (GT) par rapport à ladite structure flottante selon un axe de pilonnement (Z),
**caractérisé en ce qu'**il comporte au moins un volet (3;83,8) relié par un système articulé (A1,A2,A3) d'une part à la quille par une première liaison pivotante (A1) et d'autre part à la structure flottante (1), par un élément de liaison (4) connecté à la structure flottante (1) par une deuxième liaison pivotante (A2) et connecté au volet (3) par une troisième liaison pivotante (A3),ledit volet étant configuré pour être positionné sous la surface de l'eau, agencé de façon à suivre les oscillations de ladite quille par rotation oscillante sous l'action des mouvements de vague, et de générer un effort de propulsion dirigé substantiellement en direction du centre de gravité de ladite structure flottante.

2. Dispositif selon la revendication 1, **caractérisé en ce que** le volet (3) comprend en outre une extension arrière (8), ladite extension arrière (8) étant connectée à une partie avant (83) du volet par une liaison pivotante (A8).

3. Dispositif selon la revendication 2, **caractérisé en ce que** ladite extension arrière (8) est rappelée à une position angulaire neutre vis-à-vis de la partie avant du volet par un système de rappel à ressort (86).

4. Dispositif selon l'une des revendications 1 à 3, **caractérisé en ce que** la quille comporte plusieurs volets (3,3+) agencés les uns en dessous des autres, montés de manière à rester parallèle entre eux.

5. Dispositif selon l'une des revendications 1 à 4, **caractérisé en ce qu'**une position au repos du volet est définie par un angle fixe, ledit angle étant défini par une surface dudit volet et un axe longitudinal (X) perpendiculaire à la quille.

6. Dispositif selon l'une des revendications 1 à 5, **caractérisé en ce que** le corps du volet s'étend principalement dans un plan de travail et la largeur du volet va croissant en s'éloignant d'une zone où le système articulé relie le volet à la quille.

7. Dispositif selon l'une des revendications 1 à 6, comprenant en outre au moins un moyen de transmission du mouvement relatif de ladite quille à au moins un convertisseur électrique pour convertir l'énergie mécanique dudit mouvement en énergie électrique, le dispositif présentant alors une fonction de conversion de l'énergie du mouvement des vagues.

8. Dispositif selon la revendication 7, comprenant en outre une unité de commande (9) configurée pour piloter le taux de prélèvement de puissance par le convertisseur électrique de manière à arbitrer ainsi entre la propulsion produite par la nage à contre-courant et l'énergie de la houle transformée.

9. Dispositif selon l'une des revendications 7 à 8, **caractérisé en ce que** le moyen de transmission est au moins un vérin hydraulique (6).

10. Dispositif selon l'une quelconque des revendications 1 à 9, **caractérisé en ce qu'**il est fixé à l'arrière d'un bateau ou intégré à l'arrière d'un bateau.

11. Dispositif (10) selon l'une des revendications précédentes,
caractérisé en ce le système articulé comprend au moins un bras de commande (3,36,37) monté à rotation sur la quille par ladite première liaison pivotante (A1), et connecté à la structure flottante (1) et au volet (3) par l'élément de liaison (4) qui forme une bielle (4,46,47) connectée à la structure flottante par la deuxième liaison pivotante (A2) et connectée audit(s) bras de commande par la troisième liaison pivotante (A3), le volet (8) étant monté à rotation sur le(s)dit(s) bras de commande grâce à une articulation (A8) agencée dans une position arrière en porte-à-faux par rapport à la troisième liaison pivotante (A3).

12. Dispositif selon la revendication 11, dans lequel le volet (8) est rappelé à une position angulaire neutre vis-à-vis de(s) bras de commande (36,37) par un système de rappel à ressort (86).

## Patentansprüche

1. Vorrichtung (10) zum Antrieb und zur Gewinnung von Energie aus der Wellenbewegung, umfassend:
- wenigstens eine schwimmende Struktur (1; 100),
- wenigstens einen Kiel (2), der beweglich an der schwimmenden Struktur angebracht ist, gemäß wenigstens einer Gleitbewegung (GT) in Bezug auf die schwimmende Struktur entlang einer Dünungsachse (Z),
**dadurch gekennzeichnet, dass** sie wenigstens eine Klappe (3; 83,8) umfasst, die über ein Gelenksystem (A1, A2, A3) einerseits über eine erste Schwenkverbindung (A1) mit dem Kiel verbunden ist und andererseits über ein Verbindungselement (4), das mit der schwimmenden Struktur (1) über eine zweite Schwenkverbindung (A2) verbunden ist und mit der Klappe (3) über eine dritte Schwenkverbindung (A3) verbunden ist, mit der schwimmenden Struktur (1) verbunden ist, wobei die Klappe dazu ausgebildet ist, unter der Wasseroberfläche positioniert zu werden, derart angeordnet, dass sie den Schwingungen des Kiels durch oszillierende Rotation unter dem Einfluss der Wellenbewegungen folgt und eine Antriebskraft erzeugt, die im Wesentlichen in Richtung des Schwerpunkts der schwimmenden Struktur gerichtet ist.

2. Vorrichtung nach Anspruch 1, **dadurch gekennzeichnet, dass** die Klappe (3) ferner eine hintere Verlängerung (8) umfasst, wobei die hintere Verlängerung (8) über eine Schwenkverbindung (A8) mit einem vorderen Teil (83) der Klappe verbunden ist.

3. Vorrichtung nach Anspruch 2, **dadurch gekennzeichnet, dass** die hintere Verlängerung (8) durch ein Federrückstellsystem (86) in eine neutrale Winkelposition in Bezug auf den vorderen Teil der Klappe zurückgeführt wird.

4. Vorrichtung nach einem der Ansprüche 1 bis 3, **dadurch gekennzeichnet, dass** der Kiel mehrere untereinander angeordnete Klappen (3, 3+) aufweist, die derart angebracht sind, dass sie parallel zueinander bleiben.

5. Vorrichtung nach einem der Ansprüche 1 bis 4, **dadurch gekennzeichnet, dass** eine Ruheposition der Klappe durch einen festen Winkel definiert ist, wobei der Winkel durch eine Oberfläche der Klappe und eine Längsachse (X) senkrecht zum Kiel definiert ist.

6. Vorrichtung nach einem der Ansprüche 1 bis 5, **dadurch gekennzeichnet, dass** sich der Körper der Klappe im Wesentlichen in einer Arbeitsebene erstreckt und die Breite der Klappe mit zunehmender Entfernung von einem Bereich, in dem das Gelenksystem die Klappe mit dem Kiel verbindet, zunimmt.

7. Vorrichtung nach einem der Ansprüche 1 bis 6, ferner umfassend wenigstens ein Mittel zur Übertragung der Relativbewegung des Kiels auf wenigstens einen elektrischen Wandler, um die mechanische Energie der Bewegung in elektrische Energie umzuwandeln, wobei die Vorrichtung dann eine Funktion zur Umwandlung der Energie der Wellenbewegung aufweist.

8. Vorrichtung nach Anspruch 7, ferner umfassend eine Steuereinheit (9), die dazu ausgebildet ist, den Umfang der Leistungsentnahme durch den Stromwandler zu steuern, um so zwischen dem durch das Gegenstromschwimmen erzeugten Antrieb und der umgewandelten Wellenenergie zu vermitteln.

9. Vorrichtung nach einem der Ansprüche 7 oder 8, **dadurch gekennzeichnet, dass** das Übertragungsmittel wenigstens ein Hydraulikzylinder (6) ist.

10. Vorrichtung nach einem der Ansprüche 1 bis 9, **dadurch gekennzeichnet, dass** diese am Heck eines Bootes befestigt oder in das Heck eines Bootes integriert ist.

11. Vorrichtung (10) nach einem der vorhergehenden Ansprüche, wobei das Gelenksystem wenigstens einen Steuerarm (3, 36, 37) umfasst, der durch die erste Schwenkverbindung (A1) drehbar am Kiel angebracht ist und durch das Verbindungselement (4), das eine Pleuelstange (4, 46, 47) bildet, die über die zweite Schwenkverbindung (A2) mit der schwimmenden Struktur (1) verbunden ist und über die dritte Schwenkverbindung (A3) mit dem/den Steuerarm(en) verbunden ist, wobei die Klappe (8) an dem/den Steuerarm(en) mittels eines Gelenks (AB) drehbar angebracht ist, das in einer hinteren Position in einer Auslegerposition in Bezug auf die dritte Schwenkverbindung (A3) angeordnet ist.

12. Vorrichtung nach Anspruch 11, wobei die Klappe (8) durch ein Federrückstellsystem (86) in eine neutrale Winkelposition in Bezug auf den/die Steuerarm/e (36, 37) zurückgeführt wird.

## Claims

1. A wave movement energy propulsion and recovery device (10) comprising:
- at least one floating structure (1; 100)
- at least one keel (2) movably mounted on the floating structure, in at least one sliding movement (GT) relative to said floating structure along a heave axis (Z),
**characterised in that** it includes at least one flap (3; 83, 8) connected by an articulated system (A1, A2, A3) on the one hand to the keel by a first pivoting connection (A1) and on the other hand to the floating structure (1), by a connecting element (4) connected to the floating structure (1) by a second pivoting connection (A2) and connected to the flap (3) by a third pivoting connection (A3), said flap being configured to be positioned under the surface of the water, arranged so as to follow the oscillations of said keel by oscillating rotation under the action of the wave movements, and to generate a propulsion force directed substantially toward the centre of gravity of said floating structure.

2. The device according to claim 1, **characterised in that** the flap (3) further comprises a rear extension (8), said rear extension (8) being connected to a front part (83) of the flap by a pivoting connection (A8).

3. The device according to claim 2, **characterised in that** said rear extension (8) is returned to a neutral angular position with respect to the front part of the flap by a spring return system (86).

4. The device according to one of claims 1 to 3, **characterised in that** the keel includes several flaps (3, 3+) arranged one below the other, mounted so as to remain parallel to each other.

5. The device according to one of claims 1 to 4, **characterised in that** a rest position of the flap is defined by a fixed angle, said angle being defined by a surface of said flap and a longitudinal axis (X) perpendicular to the keel.

6. The device according to one of claims 1 to 5, **characterised in that** the body of the flap extends mainly in a work plane and the width of the flap increases moving away from an area where the articulated system connects the flap to the keel.

7. The device according to one of claims 1 to 6, further comprising at least one means for transmitting the movement relative to said keel with at least one electrical converter to convert the mechanical energy of said movement into electrical energy, the device then having a function of converting wave movement energy.

8. The device according to claim 7, further comprising a control unit (9) configured to control the power draw rate by the electrical converter so as to thus arbitrate between the propulsion produced by swimming against the current and the transformed sea swell energy.

9. The device according to one of claims 7 to 8, **characterised in that** the transmission means is at least one hydraulic cylinder (6).

10. The device according to any one of claims 1 to 9, **characterised in that** it is fixed to the rear of a boat or integrated into the rear of a boat.

11. The device (10) according to one of the preceding claims, the articulated system comprises at least one control arm (3, 36, 37) rotatably mounted on the keel by said first pivoting connection (A1), and connected to the floating structure (1) and to the flap (3) by the connecting element (4) which forms a connecting rod (4, 46, 47) connected to the floating structure by the second pivoting connection (A2) and connected to said control arm(s) by the third pivoting connection (A3), the flap (8) being rotatably mounted on said control arm(s) thanks to an articulation (A8) arranged in a rear cantilever position relative to the third pivoting connection (A3).

12. The device according to claim 11, wherein the flap (8) is returned to a neutral angular position with respect to the control arms(s) (36, 37) by a spring return system (86).
